# EUROPEAN PATENT APPLICATION

(11) **EP 2 981 041 A1**
(43) Date of publication of application: **03.02.2016**
(21) Application number: 15177787.7
(22) Date of filing: 21.07.2015
(51) Int. Cl.: H04L 29/06

(54) **CONNECTED HOME SYSTEM WITH CYBER SECURITY MONITORING**

(30) Priority: 01.08.2014 US 201414449474
(71) Applicant: Honeywell International Inc., Morris Plains, NJ 07950 (US)
(72) Inventor: Oh, Eric, Morristown, NJ New Jersey 07962-2245 (US); Zakrewski, David S., Morristown, NJ New Jersey 07962-2245 (US); Popowski, Paul M., Morristown, NJ New Jersey 07962-2245 (US)
(74) Representative: Houghton, Mark Phillip

(57) **Abstract**

A regional monitoring system includes a system control unit. A plurality of security related detectors are coupled to the control unit. A router is coupled to the control unit to implement bidirectional network communications with a displaced communications device wherein in one configuration, the control unit monitors ports of the router and responsive to detecting a predetermined router port configuration, forwards an alert indicator to the displaced device or monitors traffic patterns to detect local network threats.

## Description

### FIELD

The application pertains to regional monitoring systems which can resist cyber attacks. More particularly, the application pertains to such systems which are Internet enabled and can forward information to displaced users as to sensed anomalies.

### BACKGROUND

Connected home security systems today not only monitor the home to detect burglaries and fires, they also provide home automation and remote access outside of the home. Such systems are now vulnerable to cyber security attacks.

There are many forms of cyber attacks. One of them can be an attack on a router to either open up ports or to inject data traffic monitoring virus firmware. Connected home systems with security protection need to expand their role in protecting their respective network in addition to protecting the physical home

### BRIEF DESCRIPTION OF THE DRAWINGS

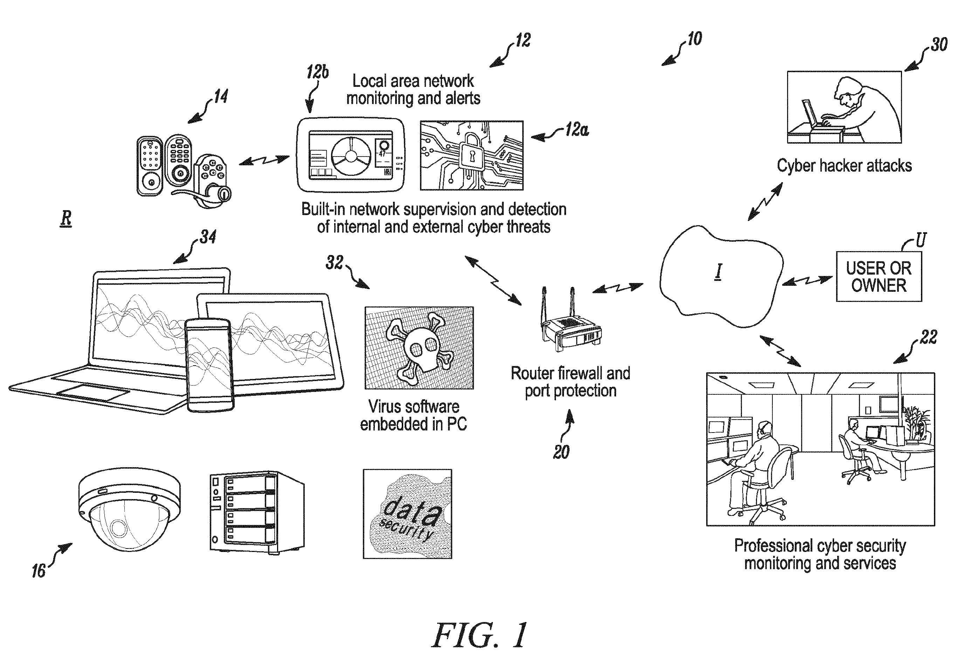

Fig. 1 is an overall diagram in accordance herewith.

### DETAILED DESCRIPTION

While disclosed embodiments can take many different forms, specific embodiments hereof are shown in the drawings and will be described herein in detail with the understanding that the present disclosure is to be considered as an exemplification of the principles hereof, as well as the best mode of practicing same, and is not intended to limit the claims hereof to the specific embodiment illustrated.

Network devices now can UPnP into the local router to open and manage ports. In accordance herewith, security automation systems can provide capabilities to monitor routers for other ports being opened by other sources. Such sources could be another monitoring control interface, such as the TUXEDO TOUCH brand of monitoring control interface, a value added module (VAM) on the local area network, or could be a virus from an infected PC.

Such systems can provide an "added value" service to alert home owners that a specious port is being opened by a device on the network. The system can send email alerts with "proactive recommendations" to users. The suggested recommendations enable a displaced user to pick and choose the most appropriate corrective actions. One of those actions can be to automatically close the ports and "protect" the home network from cyber or internal network attacks.

In another embodiment of network monitoring, automated network "digital cleanup" for the home can be provided. For example, newer network games require players to open router ports to host their own game servers to share with other players. Embodiments hereof can monitor these random game ports that are left inactive in the network (router) that the players forgot to close. The system can either automatically close them or alert the homeowner or other authorized personnel.

A system 10 in accordance herewith is illustrated in Fig. 1. A system 12 is illustrated which monitors a region R, for example a residence or office building, for a variety of different threats. These can include intrusion, smoke gas or fire. A plurality of electronically controlled locks 14, intrusion, smoke, gas fire, thermal detectors along with video cameras 16 can be provided, all for controlling or monitoring the region R, and, providing feedback to a local control unit 12a via wired or wireless communications.

One type of control unit 12a is available under the brand name of TUXEDO.TOUCH. Other types of control units come within the spirit and scope hereof.

As described above, the system 12 can communicate wirelessly via router 20, via a computer network, such as the Internet I, with a displaced monitoring service 22. System 12 can be the focus of a cyber attack, indicated at 30, via internet I and the router 20. Alternately, virus software, 32 can be injected into the system 12 via PCs, cellular phones 34 or the like.

In summary, a network security monitoring system can detect network configuration changes in a router 20 effected by specious devices, such as 30, or 34 which create network vulnerabilities. A connected security automation system, such as system 12, is capable of communicating with the network router 14 using a standard protocol such as UPnP or Bonjour and can monitor router activities and port assignments periodically.

When a specious port is opened or the fire wall setting is disabled or other router configuration changed, the monitoring system 12 can send alert messages to the homeowner, or other authorized personnel to notify them to take action. The system can then offer recommendations, wirelessly via network I to the homeowner U to take action based on simply selecting one of the recommendations from the alert message. The recommendations can be listed with priorities such as (A) undo the changes, (B) ignore one time or (C) accept the changes. Communications with the user U can be via a variety of wireless devices without limitation. These can include, phones, tablets, or personal computers, or any similar devices.

In addition to sending notifications via emails or text messages to the user U via the network I, systems, such as system 12, in accordance herewith that have a display unit, such as 12b, can also popup a warning message with the same alerts and recommendations.

In some embodiments, a service provider 22 can provide professional network cyber security protection services to subscribed users. In those instances, the system 12 can notify the monitoring service provider 22 of any new threats so they can take actions to eliminate the threat.

In other embodiments other types of detection methods could be implemented. These include, without limitation, malicious traffic pattern recognition, and blacklisting, blacklisted internet processor or processing (IP) detection (for those known bad IP blocks in Russia) and network scanning activities. Many of the attacks today arrive via email or broken web browsers and make outbound connections to servers.

Bad IP block information could be provided by the monitoring, proctection, service and updated continuously. Malicious traffic patterns could be provided by the service and updated continuously. In addition to providing information to the user regarding how they are being attacked and providing recommendations as to what they could do, the monitoring service could also be authorized to take action to stop the attack and mitigate the issue without the customer being required to do anything. Resulting actions may include but not be limited to having the FW/router block specific IP blocks, push down FW updates for devices to patch them against the issue or capturing/logging any traffic destined to bad IP blocks. With this implementation there might be enough information to be able to detect activities like crytpolocker in action and also have enough information to reverse damage that has been inflicted on the user's computer or local network. Being able to take such corrective actions is an advantage of embodiments hereof.

Additionally, methods in accordance herewith can provide homeowners or users a summary of itemized network activities. Examples include, without limitation, for each IP node on the network, identify the number of all internal and external devices that have connected to it and the accumulated data (daily, weekly & monthly). From the activity summary, blacklisted IP's can be identified. Homeowners or monitoring services can set data bandwidth thresholds to trigger an alert.

External site owner information can be identified. For any internal device sending data to an external site via an IP address, the system 12 can lookup the site information automatically and categorize it/them for further analysis. Blacklisted sites can be afforded a higher alert, gaming and entertainment sites a medium alert, government sites a low alert status. Country of origin for these sites can also be identified.

From the foregoing, it will be observed that numerous variations and modifications may be effected without departing from the spirit and scope of the invention. It is to be understood that no limitation with respect to the specific apparatus illustrated herein is intended or should be inferred. It is, of course, intended to cover by the appended claims all such modifications as fall within the scope of the claims.

Further, logic flows depicted in the figures do not require the particular order shown, or sequential order, to achieve desirable results. Other steps may be provided, or steps may be eliminated, from the described flows, and other components may be add to, or removed from the described embodiments.

## Claims

1. A method comprising:
providing a regional monitoring network;
detecting network configuration changes; and
detecting and evaluating patterns and sending alert notifications to a predetermined site.

2. A method as in claim 1 which includes providing recommendations as to responding to the respective alerts.

3. A method as in claim 1 where sending includes providing warning messages.

4. A method as in claim 1 which includes notifying a provider of monitoring services.

5. A method as in claim 1 which includes automatically closing inactive, or, suspicious ports.

6. A method as in claim 1 which includes monitoring ports of at least one router and determining if a noted change is being caused by a specious device.

7. A method as in claim 1 which includes forwarding a message to a predetermined address indicative of at least one of router related activities, virus related activities, malicious traffic patterns, blacklisted internet processor detection or network scanning activities.

8. An apparatus comprising:
a regional monitoring system with a control unit, the unit communicates with a network router to periodically monitor router activities and port assignments, and, which includes at least one of, automatically closing inactive, or, suspicious ports, forwarding a message to a predetermined address indicative of at least one of router related activities, virus related activities, malicious traffic patterns, blacklisted internet processor detection or network scanning activities.

9. An apparatus as in claim 8 with a display unit to at least visually present an alert message.

10. An apparatus as in claim 8 and which includes monitoring ports of at least one router and determining if a noted change is being caused by a specious device.

11. An apparatus as in claim 8 wherein a summary of network activities can be provided.

12. A regional monitoring system comprising:
a system control unit;
a plurality of security related detectors coupled to the control unit;
a router coupled to the control unit to implement bidirectional network communications with a displaced communications device wherein the control unit monitors ports of the router and responsive to detecting a predetermined router port configuration, forwards an alert indicator to the displaced device, or, forwards a message to a predetermined address indicative of at least one of router related activities, virus related activities, malicious traffic patterns, blacklisted internet processor detection or network scanning activities.

13. A system as in claim 12 which includes closing at least one router port in response to the detected predetermined port configuration.

14. A system as in claim 12 wherein the alert indication comprises a plurality of selectable courses of action.

15. A system as in claim 12 where the control unit includes circuitry to monitor sites to which information is being sent, and, provide alerts pertaining to at least some of the monitored sites.
